# EUROPEAN PATENT APPLICATION

(11) **EP 1 028 383 A2**
(43) Date of publication of application: **16.08.2000**
(21) Application number: 00300971.9
(22) Date of filing: 08.02.2000
(51) Int. Cl.: G06F 17/30

(54) **Data communication system, device, method and storage medium**

(30) Priority: 09.02.1999 JP 3204899
(71) Applicant: CANON KABUSHIKI KAISHA, Tokyo (JP)
(72) Inventor: Niida, Mitsuo c/o Canon Kabushiki Kaisha, Ohta-ku, Tokyo (JP); Hatae, Shinichi c/o Canon Kabushiki Kaisha, Ohta-ku, Tokyo (JP); Ohnishi, Shinji c/o Canon Kabushiki Kaisha, Ohta-ku, Tokyo (JP); Ono, Tachio c/o Canon Kabushiki Kaisha, Ohta-ku, Tokyo (JP)
(74) Representative: Beresford, Keith Denis Lewis

(57) **Abstract**

A data communication system includes a first apparatus having a first unit for controlling a predetermined function and a second apparatus for controlling the first apparatus, the data communication system comprises (a) a file management unit for managing a file treated by said first unit, the file management unit being included in the first apparatus, and (b) a communication unit for transmitting a first control signal and a second control signal for controlling the file management unit, the communication unit being included in the second apparatus, wherein the file management unit performs control based on the first control signal to transmit additional information of the file treated by the first unit, and performs the control based on the second control signal to transmit the file treated by the first unit.

## Description

### BACKGROUND OF THE INVENTION

### Field of the Invention

The present invention relates to a data communication system, a device, a method and a storage medium, particularly to a technique of managing a data file in a network for high-speed communication of information data (including image data) and command data.

### Related Background Art

Conventional peripheral apparatuses of a personal computer (hereinafter referred to as PC) include a hard disc and a printer. These peripheral apparatuses are connected to the PC via general-purpose digital interfaces such as a dedicated input/output interface and a small computer system interface (SCSI).

On the other hand, in recent years, Audio/Visual (AV) apparatuses such as a digital camera and a digital video camera have been noted as the peripheral apparatuses of the PC. These Audio/Visual (AV) apparatuses are also connected to the PC via a dedicated interface.

However, in the conventional dedicated interface and the SCSI interface, particularly when a large capacity of data such as a still image and a moving image of the AV apparatus are treated, there are many problems that a data transfer rate is low, a parallel communication cable is thick, the number and types of connectable peripheral apparatuses are reduced, a connection system is limited, and that real-time data transfer cannot be performed.

There is provided 1394-1995 specification of the Institute of Electrical and Electronics Engineers, Inc. (IEEE) as one of next-generation high-speed, high-performance digital interfaces to solve the problem.

The digital interface (hereinafter referred to as the 1394 interface) in conformity with the IEEE 1394-1995 specification has the following characteristics.
(1) The data transfer rate is high.
(2) An Isochronous transfer mode for realizing the real-time data transfer and an Asynchronous transfer mode for realizing secure data transfer are supported.
(3) A connection constitution (topology) high in freedom degree can be constructed.
(4) A plug and play function and a hot-line inserting/extracting function are supported.

However, in the IEEE 1394-1995 specification, the physical, electrical constitution of a connector, and the most basic procedures of two data transfer modes are defined, but the type of the data, the data format to follow in transmission/reception, and the communication protocol to follow in the transmission/reception are not concretely defined.

At present, it is proposed to define a logical function unit (hereinafter referred to as the subunit) in the apparatus having the 1394 interface (hereinafter also referred to as the node), and to define the communication protocol and command set for realizing a remote operation via the 1394 interface in each function unit.

At present, the proposed subunits include a video cassette recorder (VCR) subunit, and a tuner subunit. Additionally, one node can be constituted of one or more subunits.

Additionally, when a certain node performs the transfer of the data file with the subunit of the other node, the node has to be adapted to the file system of the other node subunit and the file transfer method of the subunit. This is because the method of managing the data file and additional information (hereinafter referred to as the file attribute information) concerning the data file differs with subunits, and because the method of transferring the data file and file attribute information also differs.

Therefore, when the data file and file attribute information are exchanged between different subunits, the subunit has to be adapted to the file system and file transfer method of the other subunit, the burden applied to one node is enlarged, and cost increase raises a problem. Moreover, when a certain node intends to perform the transfer of the data file with a plurality of subunits, the problem is that the node must be adapted to the file systems and file transfer methods of all the subunits.

### SUMMARY OF THE INVENTION

A concern of the present invention is to solve the above-described problems.

Another concern of the invention is to provide a technique by which the data file managed by each function unit can easily be treated even among the function units different in file system and file transfer method.

Another concern of the invention is to provide a technique by which the data files managed by one or more function units can collectively be managed:

As a preferred embodiment the present invention discloses a data communication system which includes a first apparatus having a first unit for controlling a predetermined function and a second apparatus for controlling the first apparatus, the data communication system comprising:
(a) a file management unit for managing a file treated by the first unit, the file management unit being included in the first apparatus; and
(b) a communication unit for transmitting a first control signal and a second control signal for controlling the file management unit, the communication unit being included in the second apparatus,
   wherein the file management unit performs control based on the first control signal to transmit additional information of the file treated by the first unit, and performs the control based on the second control signal to transmit the file treated by the first unit.

Moreover, as another embodiment, the present invention discloses a data communication device having a first unit for controlling a predetermined function, the data communication device comprising:
(a) a file management unit for managing a file treated by the first unit based on a predetermined management method; and
(b) a communication unit for receiving a first control signal and a second control signal transmitted from an external apparatus,
   wherein the file management unit performs control based on the first control signal to transmit additional information of the file treated by the first unit, and performs the control based on the second control signal to transmit the file treated by the first unit.

Moreover, as another embodiment, the present invention discloses a data communication method of controlling an apparatus having a first unit for controlling a predetermined function, comprising the steps of:
(a) managing a file treated by the first unit based on a predetermined management method;
(b) receiving a first control signal and a second control signal transmitted from an external apparatus;
(c) performing control based on the first control signal to transmit additional information of the file treated by the first unit; and
(d) performing the control based on the second control signal to transmit the file treated by the first unit.

Moreover, as another embodiment, the present invention discloses a storage medium in which a program for controlling an apparatus having a first unit for controlling a predetermined function is recorded, the program comprising the steps of:
(a) managing a file treated by the first unit based on a predetermined management method;
(b) receiving a first control signal and a second control signal transmitted from an external apparatus;
(c) performing control based on the first control signal to transmit additional information of the file treated by the first unit; and
(d) performing control based on the second control signal to transmit the file treated by the first unit.

Still other features of the present invention, and the advantages thereof will become fully apparent from the following detailed description of the embodiments.

### BRIEF DESCRIPTION OF THE DRAWINGS

Fig. 1 is a block diagram showing one example of a data communication system of the present embodiment.
Fig. 2 is a schematic view showing the constitution of a Proxy subunit of the present embodiment.
Fig. 3 is a block diagram showing one example of a data communication method of the present embodiment.
Figs. 4A and 4B are diagrams showing the basic data structure of the file system of the Proxy subunit.
Fig. 5 is a diagram showing the constitution example of a CREATE_DATE field.
Fig. 6 is a diagram showing the constitution example of an ACCESS_TIME field.
Fig. 7 is a diagram showing the constitution example of a SIZE field.
Fig. 8 is a diagram showing the constitution example of a NAME field.
Fig. 9 is a diagram showing one example of a code set to an encoding field.
Fig. 10 is a diagram showing one example of the code set to a TYPE field.
Fig. 11 is a diagram showing the constitution example of an IMAGE_FLAGS field.
Fig. 12 is a diagram showing the constitution example of the IMAGE_FLAGS field.
Fig. 13 is a diagram showing the constitution example of an IMAGE_WIDTH field.
Fig. 14 is a diagram showing the constitution example of an IMAGE_HIGHT field.
Fig. 15 is a diagram showing the constitution example of an IMAGE_DEPTH field.
Fig. 16 is a diagram showing the constitution example of a GROUP_ID field.
Fig. 17 is a diagram showing one example of the code set to an IMAGE_SUBTYPE field shown in Fig. 11.
Fig. 18 is a schematic view showing Function Control Protocol (FCP).
Fig. 19 is a diagram showing the constitution of an Asynchronous packet based on the FCP.
Figs. 20A and 20B are diagrams showing the structure of an FCP frame and the type of CTS for use in the present embodiment.
Figs. 21A and 21B are diagrams showing the structure of a command frame and a response frame for use in the present embodiment.
Fig. 22 is a diagram showing one example of the code set to a command type (ctype) shown in Fig. 21.
Fig. 23 is a diagram showing one example of the code set to a subunit type (subunit_type) shown in Fig. 21.
Fig. 24 is a diagram showing one example of the code set to a response type (response) shown in Fig. 21.
Fig. 25 is a diagram showing one example of the command for remote-controlling the Proxy subunit of the present embodiment.
Fig. 26 is a diagram showing the constitution of a CHANGE DIR control command.
Fig. 27 is a diagram showing the constitution of a FILE NUMBER status command.
Fig. 28 is a diagram showing the constitution of the response to the FILE NUMBER status command.
Fig. 29 is a diagram showing the constitution of a SEND ASYNCH FILE command.
Fig. 30 is a diagram showing one example of the code set to a Subfunction field.
Fig. 31 is a diagram showing one example of the code set to an Attribute field.
Fig. 32 is a diagram showing the constitution of the response to the SEND ASYNCH FILE command.
Fig. 33 is a diagram showing one example of the code set to a Status field.
Fig. 34 is a diagram showing the format example of SubFrame data.
Fig. 35 is a diagram showing one example of the code set to a frame_type field.
Fig. 36 is a diagram showing one example of the code set to a sub_type field.
Fig. 37 is a diagram showing the format example of a file list transferred from the Proxy subunit of the present embodiment.
Fig. 38 is a diagram showing the format example of a data file transferred from the Proxy subunit of the present embodiment.
Fig. 39 is an explanatory view showing the transfer procedure of the data file by the Proxy subunit of the present embodiment.
Fig. 40 is a diagram showing a procedure of setting a connection in the present embodiment.
Fig. 41 is a diagram showing the format example of the frame in which the function field is SEND_FILE_LIST.
Fig. 42 is a diagram showing the format example of the frame in which the function field is SEND_FILE_DATA.
Fig. 43 is an explanatory view showing a procedure of transferring the data file by the Proxy subunit of the present embodiment.

### DETAILED DESCRIPTION OF THE PREFERRED EMBODIMENTS

The preferred embodiments of the present invention will now be described in detail hereinafter with reference to the accompanying drawings.

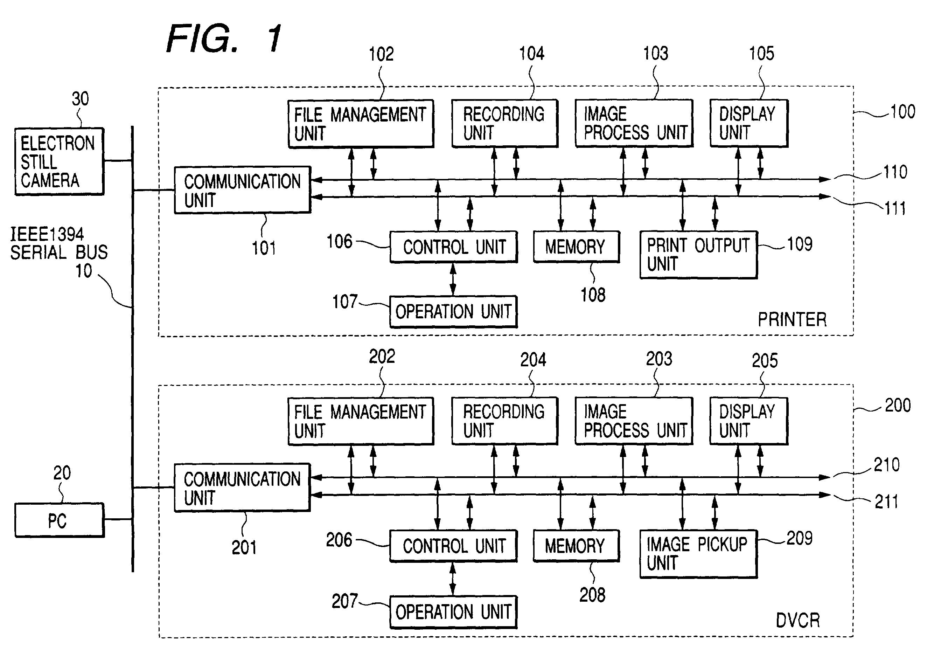

Fig. 1 is a diagram showing one example of a data communication system of the present embodiment.

In Fig. 1, numeral 100 denotes a block diagram showing the electric connection configuration of a printer. Numeral 200 denotes a block diagram showing the electric configuration of a camera integral type digital video recorder (hereinafter referred to as DVCR). These are provided with digital interfaces in conformity with the IEEE 1394-1995 specification, and the 1394 interfaces are connected to a digital serial bus 10. Moreover, the digital serial bus 10 of Fig. 1 is also connected to a PC 20 and an electron still camera 30 via the digital interfaces.

The constitution of each apparatus (hereinafter also referred to as the node) will next be described.

In a printer 100 of Fig. 1, a communication unit 101 includes the digital interface for communication with an external node via the 1394 serial bus 10. The communication unit 101 transfers the data file inside the printer 100, or receives the data file of another node according to a communication procedure described later.

A file management unit 102 provides a function (particularly, a file system) necessary for Proxy subunit described later. An image processing unit 103 performs an image processing necessary for print output on data files (image file, graphics file, text file, and the like) transferred via the 1394 serial bus 10 and on data files read from an attachable/detachable recording medium by a recording unit 104. The recording medium connected to the recording unit 104 is attachable/detachable, and can be connected to another apparatus in order to record or read the data file of the apparatus.

Moreover, in the printer 100 of Fig. 1, a display unit 105 presents necessary information for helping a user's operation. A control unit 106 includes a microcomputer and controls the operation of the entire printer 100. An operation unit 107 notifies the control unit 106 of the user's operation.

A memory 108 temporarily records the data subjected to the image processing for the print output. A print output unit 109 prints/outputs the data file subjected to the image processing for the print output. A control bus 110 transmits signals for controlling processing blocks, and a data bus 111 transmits the data to be processed by each processing block.

Here, the printer 100 of the present embodiment has two logical function units. One is a printer subunit which controls a function to print various types of data files, and a function to input the data files via the 1394 serial bus 10. The other one is Proxy subunit which has a function of managing the data file and file attribute information managed by the file system of the printer subunit with a common file system defined in the present embodiment, and supplying these to another node instead of the printer subunit. These subunits can be remote-controlled in response to a command from another node.

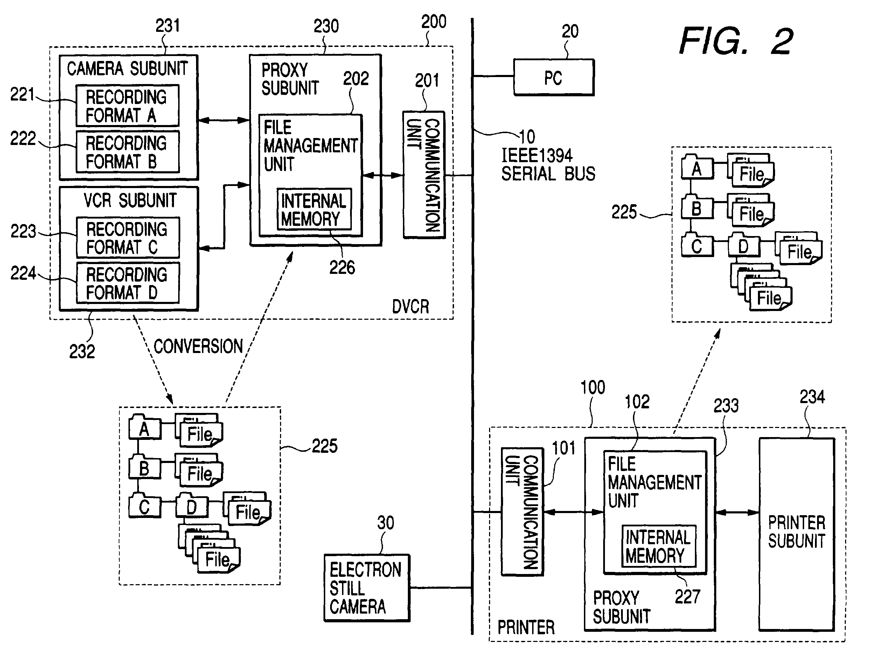

In the DVCR 200 of Fig. 2, a communication unit 201 includes a digital interface for the communication with the external node via the 1394 serial bus 10. The communication unit 201 transfers the data file inside the DVCR 200, or receives the data file of another node according to the communication procedure described later.

A file management unit 202 presents a function (particularly, a file system) necessary for Proxy subunit described later. An image processing unit 203 performs an image processing necessary for display output on data files (still image file, moving image file, graphics file, text file, and the like) transferred via the 1394 serial bus 10, data files read from the attachable/detachable recording medium by a recording unit 204, and on image data (moving image, still image) picked up by an image pickup unit 209.

The recording medium connected to the recording unit 204 is attachable/detachable, and can be connected to another apparatus in order to record or read the data file of the apparatus. A display unit 205 presents the information for helping the user's operation, the image data regenerated from the recording unit 204, and the image data picked up by the image pickup unit 209. A control unit 206 includes a microcomputer and controls the operation of the entire DVCR 200. An operation unit 207 notifies the control unit 206 of the user's operation.

A memory 208 temporarily records the data subjected to the image processing for the display. The image pickup unit 209 generates an electric signal from the optical image of an object, and converts the electric signal to an image signal with a predetermined format. Here, the image pickup unit 209 can pick up the moving image and the still image. A control bus 210 transmits signals for controlling processing blocks, and a data bus 211 transmits the data to be processed by each processing block.

Here, the DVCR 200 of the present embodiment has three logical function units. One is a camera subunit which controls a function of picking up the still image and moving image and converting the images to the image file of the predetermined data file, and a function of outputting the image file via the 1394 serial bus 10. Another one is VCR subunit which controls a function of recording/regenerating the still image file and the moving image file, and a function of inputting/outputting the image file via the 1394 serial bus 10. The other one is Proxy subunit which has a function of managing the data file and file attribute information managed by the file system of the camera subunit and VCR subunit with the common file system defined in the present embodiment, and supplying these to another node instead of the camera subunit or the VCR subunit. These subunits can be remote-controlled in response to the command from another node.

Moreover, the electron still camera 30 has two logical function units. One is the above-described camera subunit, and the other one is the Proxy subunit of the present embodiment. The PC 20 has two logical function units. One is a subunit which controls a function of recording/regenerating various types of data files, and a function of inputting/outputting the data files via the 1394 serial bus 10. The other one is the Proxy subunit of the present embodiment. These subunits can be remote-controlled in response to the command from another node.

### (1) Description of Proxy Subunit

Fig. 2 is an explanatory view of the subunit of the DVCR 200 and the subunit of the printer 100.

In Fig. 2, a camera subunit 231 of DVCR 200 manages a function of generating the image file and file attribute information in conformity with a recording type A (e.g., JPEG system) or a recording type B (e.g., EXIF system) from the image signal outputted from the image pickup unit 209, and recording these into the recording unit 204. In this case, the camera subunit 231 manages the file attribute information of each image file based on the file system for the camera subunit.

A VCR subunit 232 of DVCR 200 manages a function of generating the image file and file attribute information in conformity with a recording type C (e.g., DV system) or a recording type D (e.g., MPEG system) from the image signal outputted from the image pickup unit 209 or the image signal inputted from the outside, recording these into the recording unit 204, or regenerating them. In this case, the VCR subunit 232 manages the file attribute information of each image file based on the file system for the VCR subunit.

Prosy subunit 230 of DVCR 200 converts the file attribute information managed by the file system of each subunit 231, 232 to the common file system among the Proxy subunits. This file system is stored in an internal memory 226.

Proxy subunit 233 of the printer 100 converts the file attribute information managed by the file system of the a printer subunit 234 to the common file system among the Proxy subunits. This file system is stored in an internal memory 227.

The Proxy subunits 230, 233 can also convert the file system managed by the Proxy subunit of another node to the file system of each subunit 231, 232 and present the system. In this case, the subunits 231, 232 can easily treat the data files managed by various subunits.

In the present embodiment, the file systems of the Proxy subunits 230, 233 manage the file attribute information of the data files in a hierarchical manner. One example of the file system constitution is shown in 225 of Fig. 2. The file system is constituted in the hierarchical manner, and each layer is represented by a directory. The file attribute information of each data file is stored in each directory in accordance with the data structure described later. The example in which different directories are constituted for the recording types is shown in 225 of Fig. 2. Additionally, each directory may be constituted by a subunit unit.

As described above, in the Proxy subunits 230, 233 of the present embodiment, the file systems different with the function units can be constituted as a common file system for the Proxy subunit. In this function, only by mounting the Proxy subunit on each node, the common file system independent of each function unit can be supplied to the node connected to the 1394 serial bus 10.

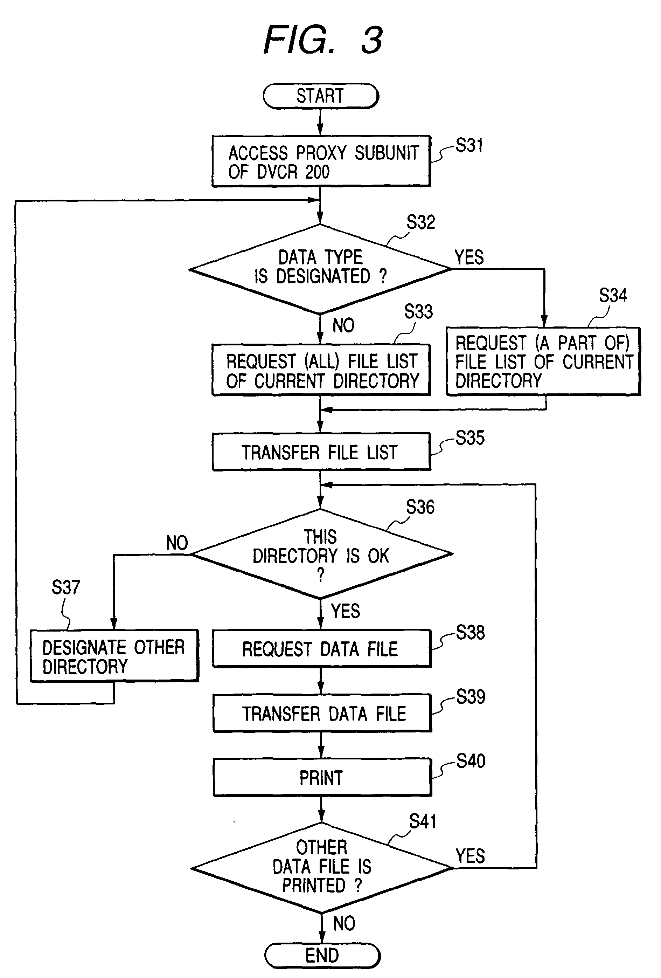

Fig. 3 is an explanatory view showing a procedure by which the Proxy subunit 233 of the printer 100 accesses the Proxy subunit 230 of the DVCR 200 according to the user's operation.

First, the Proxy subunit 233 of the printer 100 accesses the Proxy subunit 230 of the DVCR 200, and uses CURRENT DIR command described later to inquire for the current directory (S31).

Subsequently, the Proxy subunit 233 of the printer 100 designates the type of the data file requiring the file attribute information (S32). The types of the data file include text, image, voice, moving image, and the like, but in this case, either one of the still image files of the recording types A, B and the moving image files of the recording types C, D is designated.

When all the data files are designated, the Proxy subunit 233 of the printer 100 uses SEND ASYNCH FILE command described later to request the file attribute information of all the data files present in the current directory (S33).

On the other hand, when the predetermined type of the data file is designated, the Proxy subunit 233 of the printer 100 uses the SEND ASYNCH FILE command described later to request the file attribute information of the predetermined type of the data file present in the current directory (S34).

After receiving this SEND ASYNCH FILE command, the Proxy subunit 230 of the DVCR 200 controls the file management unit 202 to generate a file list constituted of the requested file attribute information. This file list is transferred to the printer 100 from the DVCR 200 in accordance with Asynchronous Connection described later (S35).

The Proxy subunit 233 of the printer 100 holds the received file list in the internal memory of the file management unit 102, and additionally displays the list on the display unit 105. A user judges, based on this display result, whether or not the data file to be printed exists, and whether or not another directory is to be referred to (S36).

When another directory is referred to, the Proxy subunit 233 of the printer 100 uses CHANGE DIR command described later to move to the directory designated by the user (S37). Thereafter, the Proxy subunit 230 executes the processing on and after S32.

On the other hand, there is a data file to be printed, the Proxy subunit 233 of the printer 100 uses the SEND ASYNCH FILE command described later to request the data file designated by the user (S38). Simultaneously, the printer 100 is placed in an operation state for the print.

After receiving the SEND ASYNCH FILE command, the Proxy subunit 230 of the DVCR 200 controls the recording unit 209 to read the requested data file. This data file is transferred to the printer 100 from the DVCR 200 in accordance with Asynchronous Connection described later (S39).

The Proxy subunit 233 of the printer 100 supplies the received data file to the printer subunit. The printer subunit controls the image processing unit 103 and the print output unit 109 to print this data file (S40).

Subsequently, the user instructs the display unit 105 whether or not to print other data file based on the display information (S40). When the other data file is to be printed, the Proxy subunit 230 executes the processing on and after S36.

By the above-described procedure, the Proxy subunit of the present embodiment can set the file transfer method different with the subunits to be common. By this function, only by providing each node with the Proxy subunit, the node can easily and efficiently exchange the data file with various subunits.

Additionally, the procedure shown in Fig. 3 is not limited to the processing of printing the image file managed by the Proxy subunit 230 of the DVCR 200 with the printer 100, and can similarly be applied to a processing of printing the image file of the electron still camera 30 by the printer 100, a processing of printing the image file, text file, and the like of the PC 20 by the printer 100, a processing of storing the image file of the electron still camera 30 or DVCR 200 into the PC 20, a processing of storing the image file of the electron still camera 30 into the DVCR 200, and the like.

### (2) Description of File System of Proxy Subunit

The data structure managed by the file system of the Proxy subunit will next be described in detail.

The file system of the Proxy subunit of the present embodiment is provided with a function of converting the file system of each subunit to the common file system, and a function of managing various data files and file attribute information handled by each subunit for each subunit in a hierarchical manner.

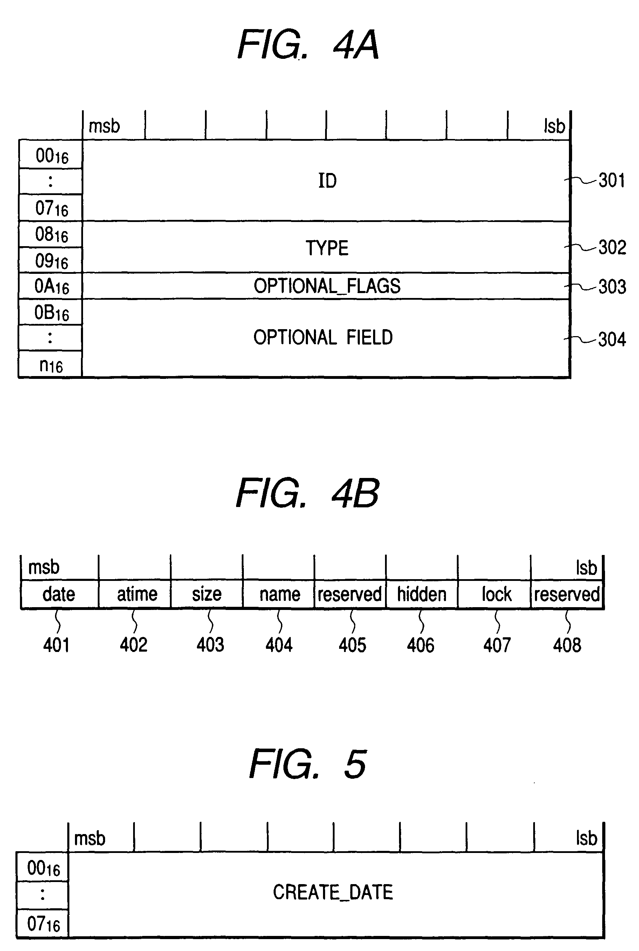

Fig. 4A shows the basic data structure for managing the file attribute information of each data file. Here, this data structure is constituted in a hierarchical manner. Additionally, in Fig. 4A, hexadecimal numerals on the left side are numerals for representing the data structure by byte unit.

In Fig. 4A, a field 301 (8 bytes) is an ID field, and an ID number for identifying the file is stored in this field. However, when all the bits of the ID field 301 are "0", the current directory is represented. Moreover, when all the bits of the ID field 301 are "1", the parent directory of the current directory is represented.

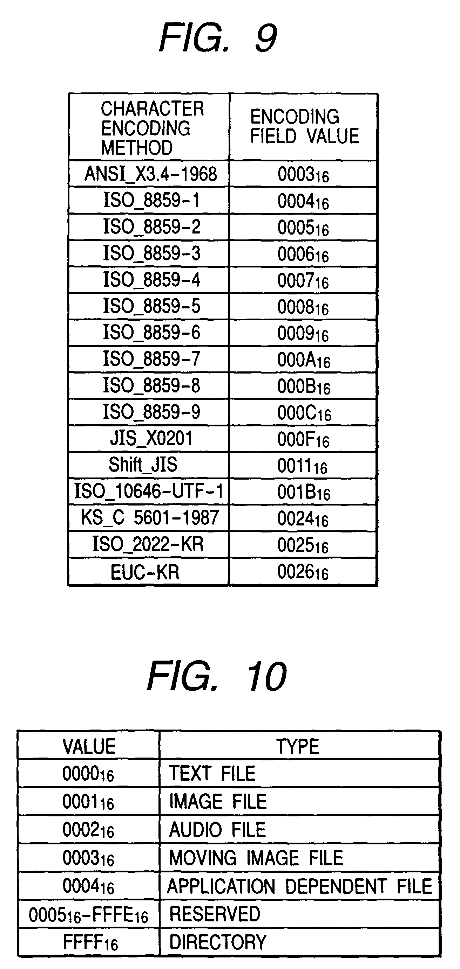

A field 302 (2 bytes) is a TYPE field. As described later, the TYPE field 302 indicates a data file type. Fig. 10 is a diagram showing one example of the value stored in the TYPE field 302. In Fig. 10, "0000₁₆" indicates, for example, a text file. Moreover, " 0001₁₆" indicates, for example, an image file. Furthermore, "0002₁₆"indicates, for example, an audio file. Additionally, "0003₁₆" indicates, for example, a moving image file. Moreover, "0004₁₆" indicates, for example, a data file inherent in application. Furthermore, "0005₁₆" to "FFFE₁₆" are reserved for future extension. Moreover, "FFFF₁₆" indicates a directory.

A field 303 (1 byte) is an OPTIONAL_FLAGS field. This field indicates the presence of the field for describing various file attribute information described later, and stores various types of additional information. By checking this field, the presence/absence of the detailed description of various types of file attribute information can easily be confirmed.

A field 304 is a field with a variable length. The field 304 is an OPTIONAL_FIELD, and its presence/absence is determined by the above-described OPTIONAL_FLAGS field 303.

One example of the structure of the OPTIONAL_FLAGS field 303 will next be described with reference to Fig. 4B. In Fig. 4B, a most significant bit (hereinafter referred to as msb) is a data flag 401, and indicates the presence/absence of CREATE_DATE field described later (see Fig. 5). The information concerning a data file creation date is stored in this field. When the value of the data flag 401 is "1", the above-described CREATE_DATE field exists in the OPTIONAL_FIELD 304. When the value of the data flag 401 is ^{"}0^{"} the above-described CREATE_DATE field does not exist.

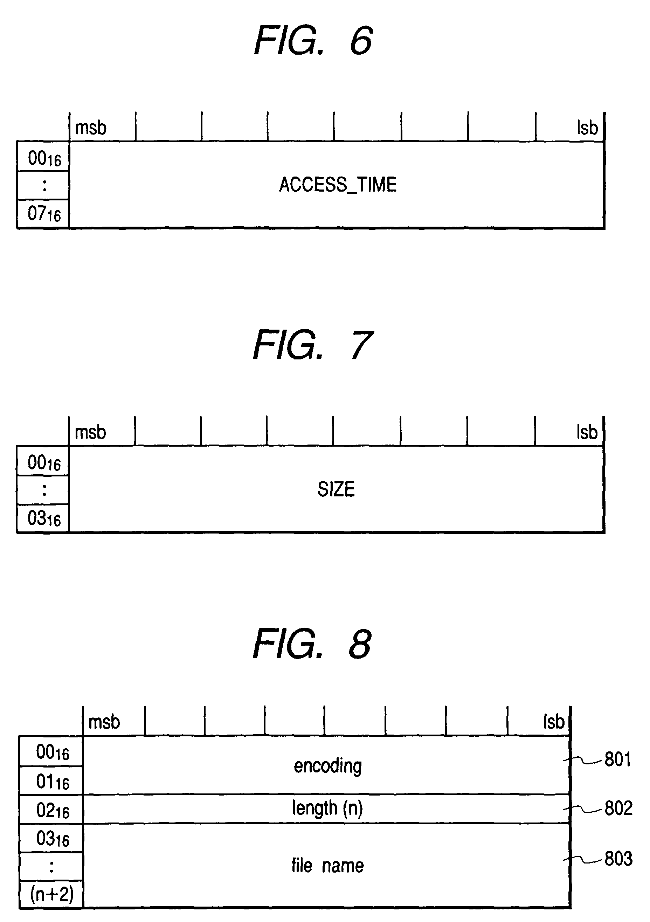

A second bit is an atime flag 402, and indicates the presence/absence of ACCESS_TIME field described later (see Fig. 6). The information concerning a data file final access date is stored in this field. When the value of the atime flag 402 is "1", the above-described ACCESS_TIME field exists in the OPTIONAL_FIELD 304. When the value of the atime flag is "0", the above-described ACCESS_TIME field does not exist.

A third bit is a size flag 403, and indicates the presence/absence of SIZE field described later (see Fig. 7). The information indicating a data file data size by a byte unit is stored in this field. When the value of the size flag 403 is "1", the SIZE field exists in the OPTIONAL_FIELD 304. When the value of the size flag is "0", the SIZE field does not exist.

A fourth bit is a name flag 404, and indicates the presence/absence of NAME field described later (see Fig. 8). The information indicating a file name or a directory name is stored in this field. When the value of the name flag 404 is "1", the NAME field exists in the OPTIONAL_FIELD 304. When the value of the name flag 404 is "0", the NAME field does not exist.

A fifth bit is a reserved bit 405, and is reserved for the future extension. The value of the reserved bit 405 is necessarily "0".

A sixth bit is a hidden flag 406, and indicates whether or not the data file can be read out. The value of the hidden flag 406 of "1" indicates that the reading of the data file is impossible. When the value of the hidden flag 406 is "0", the data file can be read out.

A seventh bit is a lock flag 407, and indicates whether or not the writing to the data file is possible. When the value of the lock flag 407 is "1", the other node cannot access the data file. When the value of the lock flag 407 is "0", the data file can be accessed.

A least significant bit (hereinafter referred to as lsb) is a reserved bit 408, and is reserved for the future extension. The value of the reserved bit 408 is necessarily "0" when read out.

One example of the constitution of the CREATE_DATE field will next be described in detail with reference to Fig. 5. The hexadecimal numerals on the left side of Fig. 5 are offsets for representing the field by byte unit. The CREATE_DATE field shown in Fig. 5 is constituted, for example, of data of 64 bits, and this value indicates the data file creation date. For example, time information is stored on the basis of 00:00:00, January 1, 1970 by second unit in the field.

One example of the constitution of the ACCESS_TIME field will next be described in detail with reference to Fig. 6. The hexadecimal numerals on the left side of Fig. 6 are offsets for representing the field by byte unit. The ACCESS_TIME field is constituted, for example, of data of 64 bits, and this value indicates the file final access date. For the value of the field, in a similar manner as the value of the CREATE_DATE field, for example, time is stored on the basis of 00:00:00, January 1, 1970 by second unit in the field.

One example of the constitution of the SIZE field will next be described in detail with reference to Fig. 7. The hexadecimal numerals on the left side of Fig. 7 are offsets for representing the field by byte unit. The SIZE field shown in Fig. 7 is a field, for example, of 32 bits, and this value indicates the file size by byte unit.

One example of the constitution of the NAME field will next be described in detail with reference to Fig. 8. The hexadecimal numerals on the left side of Fig. 8 are offsets for representing the field by byte unit. The NAME field shown in Fig. 8 is, for example, a field with a variable length. First is an encoding field (2 bytes) 801, in which the value indicating a character encoding method applied to a file_name field 803 is stored. Here, one example of the character encoding method is shown in Fig. 9. For the value shown in Fig. 9, the value defined, for example, by RFC 1700 specification is utilized.

Next is a length field (1 byte) 802, and the value indicating the length of the file_name field 803 by byte unit is stored. Final is file_name field (variable length) 803, and the file name is stored. The file name is indicated by this field 803.

The above-described CREATE_DATE field, ACCESS_TIME field, SIZE field, and NAME field are stored in this order in the OPTIONAL_FIELD 304 in a hierarchical manner. Moreover, the presence of the fields can be confirmed by the OPTIONAL_FLAGS field 303. Thereby, the presence/absence of the detailed description of various file attribute information can easily be detected.

The content described in the above-described data structure will next be described in more detail. In the file system of the Proxy subunit, the data structure for describing further detailed information for each file type shown in TYPE field 302 is disposed in another layer.

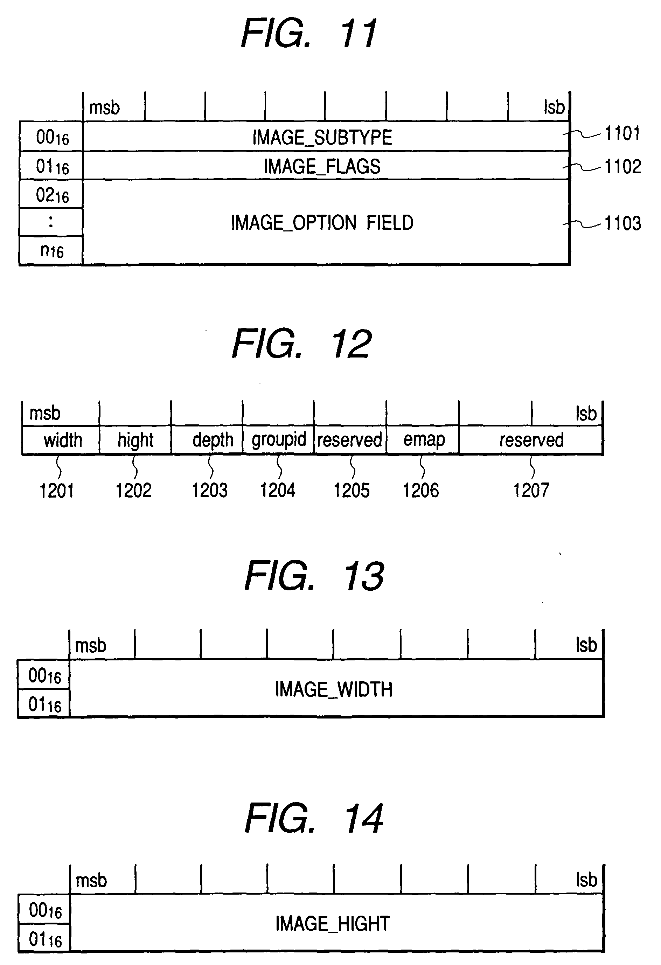

One example of the data structure constituted for each file type will be described hereinafter with reference to Fig. 11. In Fig. 11, the hexadecimal numerals on the left side are numerals of byte unit indicating the data structure.

In Fig. 11, a field 1101 (1 byte) is an IMAGE_SUBTYPE field. The IMAGE_SUBTYPE field 1101 indicates the format of the image file.

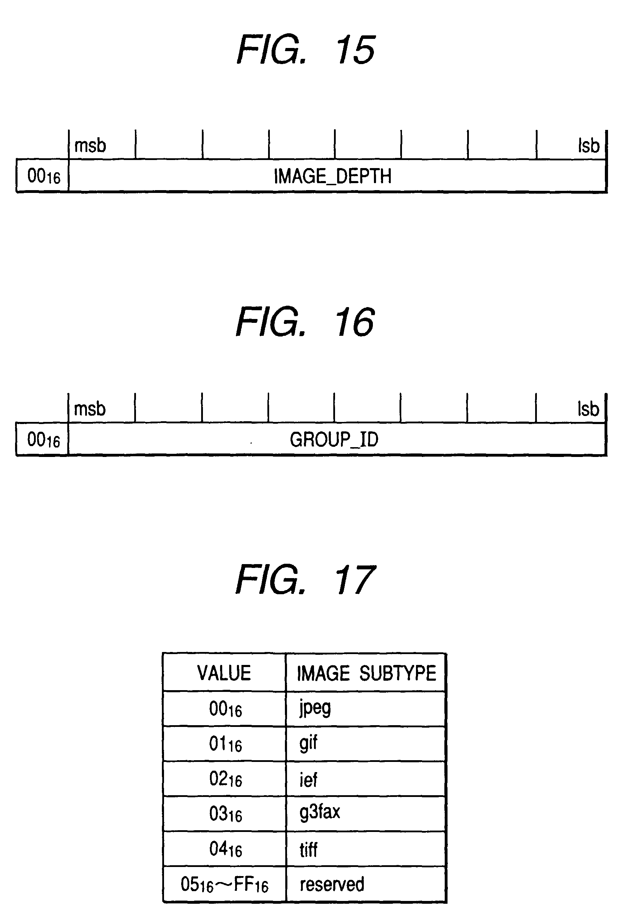

One example of the value stored in the IMAGE_SUBTYPE field 1101 is shown in Fig. 17. In Fig. 17, "00₁₆" indicates the image file, for example, of Joint Photographic Expert Group (JPEG) format. Moreover, "01₁₆" indicates the image file, for example, of Graphics Interchange Format (GIF). Furthermore, "02₁₆" indicates the image file, for example, of Image Exchange Format (IEF). Additionally, "03₁₆" indicates the image file, for example, of G3 facsimile format. Moreover, "04₁₆" indicates the image file, for example, of Tag Image File Format (TIFF). Furthermore, "05₁₆" to "FF₁₆" are reserved for the future extension.

A field 1102 (1 byte) is an IMAGE_FLAGS field. The presence of the field for describing various attribute information of the image file is shown, and various additional information are stored in the IMAGE_FLAGS field 1102. By checking this field, the detailed description of various attribute information can easily be confirmed.

A field 1103 (variable length) is IMAGE_OPTION_FIELD, and the presence/absence of this field is determined by the IMAGE_FLAGS field 1102. Fig. 12 shows one example of the structure of the IMAGE_FLAGS field 1102.

In Fig. 12, the msb is a width flag 1201, and indicates the presence/absence of IMAGE_WIDTH field described later. The information indicating the image width of a pixel unit is stored in this field. When the value of the width flag 1201 is "1", the IMAGE_WIDTH field exists in the IMAGE_OPTION_FIELD 1103. When the value of the width flag 1201 is "0", the IMAGE_WIDTH field does not exist.

A second bit is a hight flag 1202, and indicates the presence/absence of IMAGE_HIGHT field described later. The information indicating the image height of a line unit is stored in this field. When the value of the hight flag 1202 is "1", the IMAGE_HIGHT field exists in the IMAGE_OPTION_FIELD 1103. When the value of the hight flag 1202 is "0", the IMAGE_HIGHT field does not exist.

A third bit is a depth flag 1203, and indicates the presence/absence of IMAGE_DEPTH field described later. The information indicating the number of bits per pixel is stored in this field. When the value of the depth flag 1203 is "1", the IMAGE_DEPTH field exists in the IMAGE_OPTION_FIELD 1103. When the value of the depth flag 1203 is "0" the IMAGE_DEPTH field does not exist.

A fourth bit is a groupid flag 1204, and indicates the presence/absence of GROUP_ID field described later. When the image attribute information is constituted of a plurality of files, a group identification number for treating the plurality of files as a group is stored in this field. When the value of the groupid flag 1204 is "1", the GROUP_ID field exists in the IMAGE_OPTION_FIELD 1103. When the value of the groupid flag 1204 is "0", the GROUP_ID field does not exist.

A fifth bit is a reserved bit 1205, and is reserved for the future extension. The value of the reserved bit is necessarily zero.

A sixth bit is a cmap flag 1206, and indicates whether the image file has a color map or a color index. When the image file has the color map or the color index, the value of the cmap flag 1206 is "1", and when the image file does not have either one, the cmap flag 1206 is "0". Additionally, when the value of the cmap flag 1206 is "1", the color map or the color index may be present in the image file, or may be held by the other file.

Two bits of seventh and eighth bits (lsb) are in a reserved field 1207, and reserved for the future extension. The value of the reserved field 1207 is necessarily zero.

One example of the constitution of the above-described IMAGE_WIDTH field will next be described in detail with reference to Fig. 13. The hexadecimal numerals on the left side of Fig. 13 are offsets for representing the field by byte unit. The IMAGE_WIDTH field shown in Fig. 13 is constituted, for example, of data of 16 bits, and this value indicates the image width of the pixel unit.

One example of the constitution of the IMAGE_HIGHT field will next be described in detail with reference to Fig. 14. The hexadecimal numerals on the left side of Fig. 14 are offsets to represent the field by byte unit. The IMAGE_HIGHT field shown in Fig. 14 is constituted, for example, of data of 16 bits, and this value indicates the image height of the line unit.

One example of the constitution of the IMAGE_DEPTH field will next be described in detail with reference to Fig. 15. The hexadecimal numeral on the left side of Fig. 15 is an offset to represent the field by byte unit. The IMAGE_DEPTH field shown in Fig. 15 is constituted, for example, of data of 8 bits, and this value Indicates the number of bits per pixel.

One example of the constitution of the GROUP_ID field will next be described in detail with reference to Fig. 16. The hexadecimal numeral on the left side of Fig. 16 is an offset to represent the field by byte unit. The GROUP_ID field shown in Fig. 16 is constituted, for example, of data of 8 bits, and this value indicates the group identification number. Here, when the image attribute information is constituted of a plurality of files, the group identification number is information for treating the plurality of files as the group.

The above-described IMAGE_WIDTH field, IMAGE_HIGHT field, IMAGE_DEPTH field, and GROUP_ID field are stored in this order in the IMAGE_OPTION_FIELD 1103. Moreover, the presence of the fields can be confirmed by the IMAGE_FLAGS field 1102. Thereby, the presence/absence of the detailed description of various attribute information of the image file can easily be detected.

As described above, the Proxy subunit of the present embodiment has a function of converting the file system different among the subunits to the common file system, and a function of managing various data files treated by each subunit and the file attribute information for each subunit in a hierarchical manner. Since the nodes 100, 200, 20, 30 connected to the 1394 serial bus 10 issue control commands described later to the above-described Proxy subunits, the data file and file attribute information managed by a certain subunit can easily and efficiently be obtained in accordance with the communication protocol (Asynchronous Connection) described later.

### (3) Description of Command for remote-controlling Proxy Subunit

The communication procedure and various control commands for remote-controlling the Proxy subunit of the present embodiment will next be described. Since each node on the 1394 serial bus 10 issues various control commands in accordance with the communication procedure described later, the data file and file attribute information managed by each function unit can easily be obtained and confirmed via the file system of the Proxy subunit. Moreover, this is not limited, and the desired data file can also be remote-controlled by various functions presented by the Proxy subunit.

Various commands and responses necessary for remote-controlling the Proxy subunit of the present embodiment are transferred onto the 1394 serial bus 10 based on Function Control Protocol (hereinafter referred to as FCP).

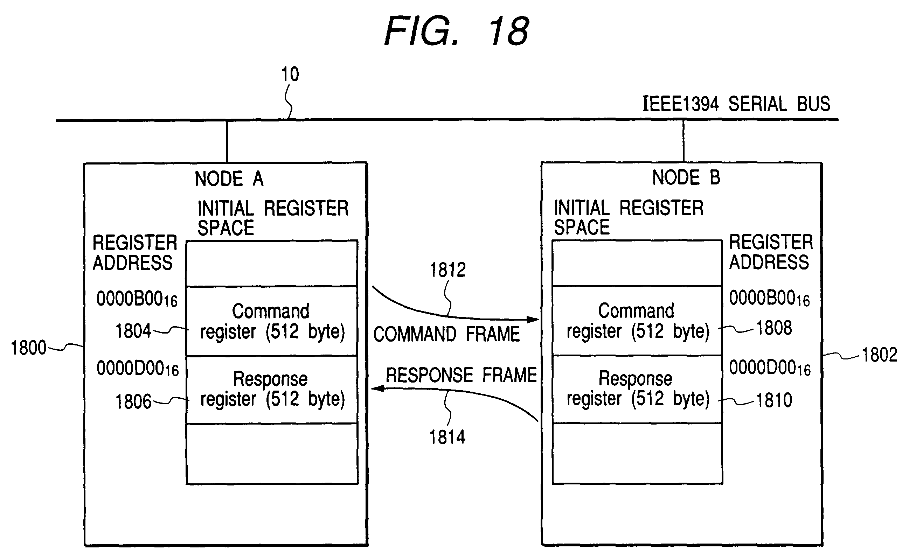

The FCP will be described hereinafter with reference to Fig. 18.

The FCP is a protocol designed for controlling each node connected onto the 1394 serial bus 10. In the FCP, various preset command sets and command transactions can be utilized. The command and response data transmitted/received based on the FCP are packetized in the communication packet (hereinafter referred to Asynchronous packet) for Asynchronous transfer system defined in the IEEE 1394-1995 specification.

In the FCP, the node for controlling the operation of one or more nodes is called "controller", and the node to be controlled is called "target". In Fig. 18, a controller (node A) 1800, and a target (node B) 1802 function.

In the present embodiment, the payload portion of the Asynchronous packet generated based on the FCP is called "FCP frame". Moreover, in the present embodiment, the FCP frame (including various commands described later) transmitted to the target 1802 from the controller 1800 is called "command frame", and the FCP frame (including various response data described later) transmitted to the controller 1800 from the target 1802 is called "response frame". Moreover, a register prepared for reception of the command frame is called "command register", and a register prepared for the reception of the response frame is called "response register".

In Fig. 18, numeral 1804 denotes the command register of the controller 1800, 1806 denotes the response register of the controller 1800, 1808 denotes the command register of the target 1802, and 1810 denotes the response register of the target 1802. Each register is allocated to an apart position on a common address space in each node.

Moreover, in Fig. 18, numeral 1812 denotes a command frame Asynchronous-transferred to the target 1802 from the controller 1800, and 1814 denotes a response frame Asynchronous-transferred to the controller 1800 from the target 1802. The command frame 1812 is written to the command register 1808 of the target 1802 based on the Asynchronous transfer in which a write transaction is designated. Furthermore, the response frame 1814 is written to the response register 1806 of the controller 1800 based on the Asynchronous transfer in which the write transaction is designated.

Here, each of the above-described registers is designated by a destination offset address. In the FCP, by executing the write transaction with the designated destination offset address, the command frame 1812 and response frame 1814 can be written to each register. In Fig. 18, the top address of "Initial register space" is "FFFFF0000000₁₆", the top address of the command register is "FFFFF0000B00₁₆", and the top address of the response register is "FFFFF0000D00₁₆".

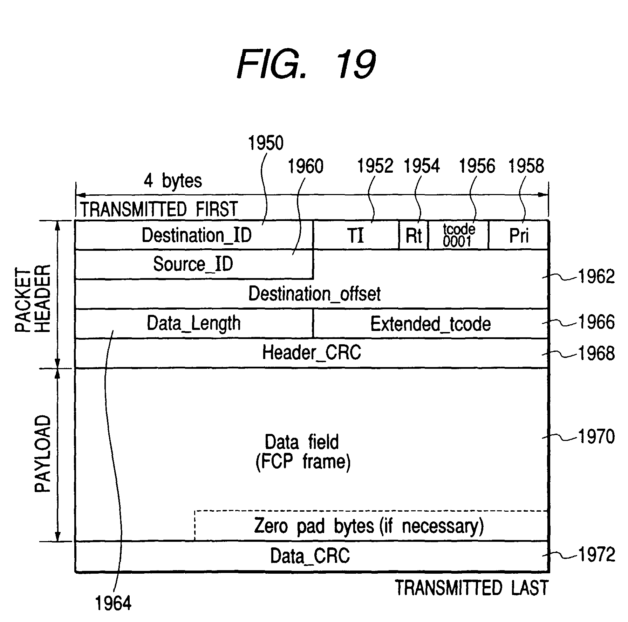

The constitution of the Asynchronous packet generated based on the FCP will next be described with reference to Fig. 19.

In Fig. 19, numeral 1950 denotes a destination node ID (DESTINATION_ID), 1952 denotes a transaction label (Tl), 1954 denotes a retry code (Rt), 1956 denotes a transaction code (tcode), 1958 denotes priority (Pri), 1960 denotes a source node ID (SOURCE_ID), 1962 denotes a destination offset address (DESTINATION_offset), 1964 denotes the data length (Data_Length) of the payload (data field), 1966 denotes an extended transaction code (Extended_tcode), 1968 denotes a header CRC (Header_CRC), 1970 denotes a data field (including the FCP frame), and 1972 denotes a data CRC (Data_CRC).

The asynchronous packet shown in Fig. 19 is constituted, for example, by a unit of 4 bytes (32 bits, hereinafter referred to quadret).

In Fig. 19, the node ID of a destination node (reception destination) is designated in the field 1950 (16 bits). The inherent tag of each transaction is designated in the field 1952 (6 bits). The field 1954 (2 bits) designates whether the packet makes a retry.

The packet format, and the type of the transaction to be executed are designated in the field 1956 (4 bits). For example, when the transaction of the writing request of the data block is designated, the value of the field 1956 is 00012. The priority order is designated in the field 1958 (4 bits). In the FCP, the value of the field 1958 is, for example, 00002.

The node ID of the source node (transmission source) is designated in the field 1960 (16 bits). The address to designate the predetermined register in the memory space of the destination node (i.e., the above-described destination offset address) is stored in the field 1962 (48 bits). The field 1964 (16 bits) indicates the length of the data field 1970 by byte unit.

The extended transaction code is designated in the field 1966 (16 bits). For example, when the transaction of the writing request of the data block is designated, the value of the field 1966 is 000016. The field 1968 (32 bits) is used for the error detection of the packet header. Here, the packet header is constituted of the fields 1950 to 1966.

The command frame and response frame described later are stored in the data field 1970 (variable length). Here, the data field 1970 is also called the payload. Additionally, when the data stored in the data field 1970 is less than the multiple of quadret (4 bytes), 0 is applied.

Specifically, in the data length stored in the field 1964 and indicated by byte (8 bits) unit, when the value of the field 1964 is not a multiple of four, the field is filled with the data with a value of "0016" until the field value reaches one quadret. The field 1972 (32 bits) is used for the error detection of the data field 1970.

Command/Transaction Set as one of FCP components will next be described. The CTS designates the command set, the structures of the command and response fields of the FCP frame described later, and the transaction rule during the transmission of the control command and response data.

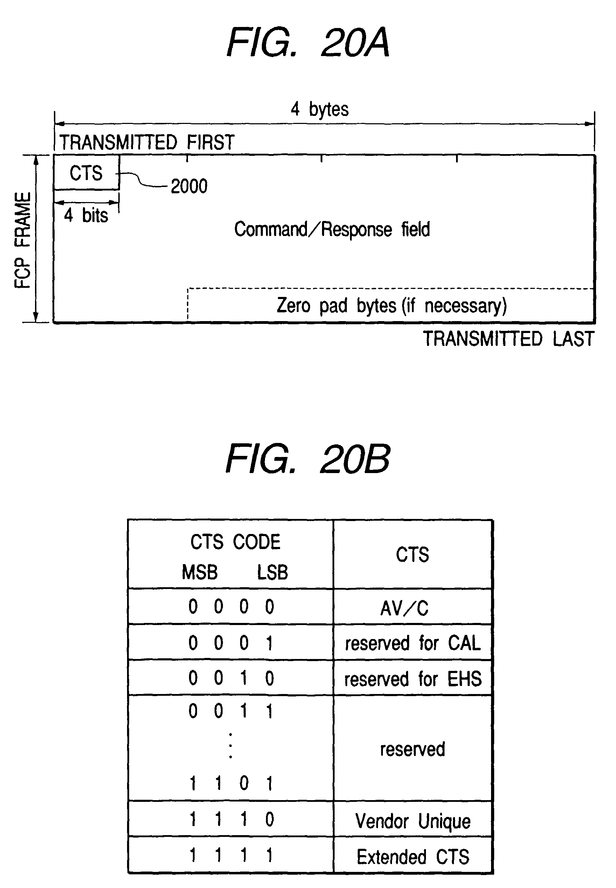

Fig. 20A is a diagram showing the structure of the FCP frame for use in CTS. In Fig. 20A, a field 2000 (4 bits) indicates the CTS type. One example of CTS type is shown in Fig. 20B.

In the following, for the present embodiment, the value of CTS is set to "0000₂", and the example of use of the FCP frame in conformity with AV/C Digital Interface Command Set General Specification (hereinafter referred to as AV/C Command Set specification) will be described.

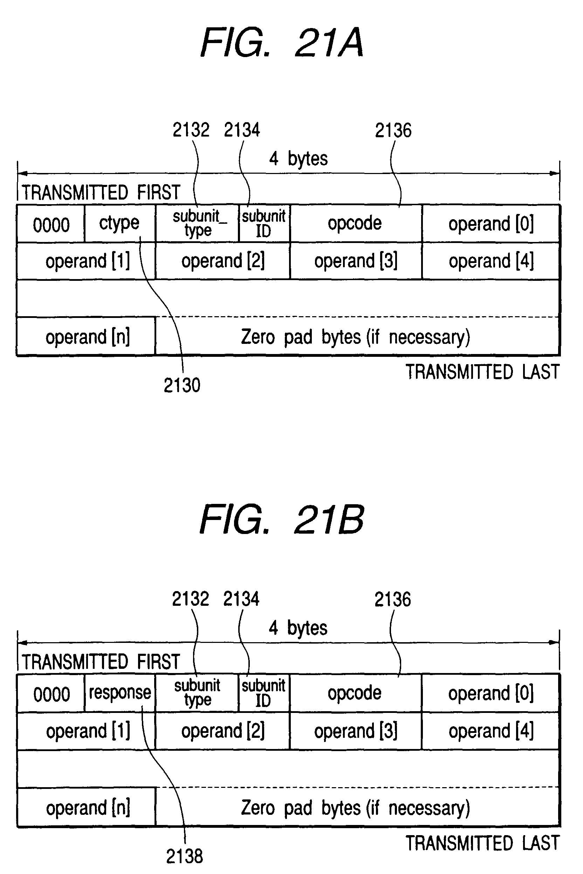

Figs. 21A and 21B are diagrams showing the structures of the command frame and response frame based on the AV/C Command Set specification. Fig. 21A shows the structure of the command frame, and Fig. 21B shows the structure of the response frame.

In Fig. 21A, a field 2130 (4 bits) indicates a command type (hereinafter referred to as ctype), a field 2132 (5 bits) indicates a subunit type (hereinafter referred to as subunit_type), a field 2134 (3 bits) indicates a subunit ID (hereinafter referred to as subunit_ID), and a field 2136 indicates an operation code (hereinafter referred to as opcode).

Moreover, operand[0], operand[1], ..., operand[n] are stored for each byte in the field 2136 and the subsequent fields.

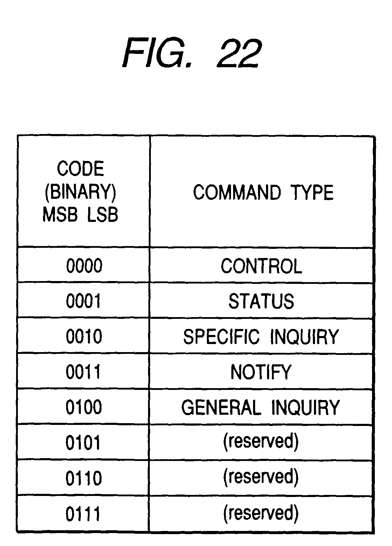

First, the ctype of the field 2130 will be described. Fig. 22 is a diagram showing one example of a relation between the value of the field 2130 and the command type (ctype). When the controller 1800 is to control a certain object of the target 1802, the ctype indicates "CONTROL" of Fig. 22. Here, the object is designated by the opcode and operand[0] to [n] described later. In the following, the command frame in which the ctype indicates "CONTROL" is called CONTROL command.

Moreover, when the controller 1800 intends to inquire for the current state of the object of the target 1802, the ctype indicates "STATUS" of Fig. 22. Here, the control object is designated by the opcode and operand[0] to [n] described later. In the following, the command frame in which the ctype indicates "STATUS" is called STATUS command.

Furthermore, when the controller 1800 intends to be notified by the target 1802 that the state of the object of the target 1802 has changed, the ctype indicates "NOTIFY" of Fig. 22. Here, the object state is designated by the opcode and operand[0] to [n] described later. In the following, the command frame in which the ctype indicates "NOTIFY" is called NOTIFY command.

Additionally, when the controller 1800 intends to confirm whether or not the target is provided with the CONTROL command having the same opcode, the ctype indicates "SPECIFIC INQUIRY" or "GENERAL INQUIRY" of Fig. 22. In the following, the command frame in which the ctype indicates "SPECIFIC INQUIRY" is called SPECIFIC INQUIRY command, and the command frame in which the ctype indicates "GENERAL INQUIRY" is called GENERAL INQUIRY command

Here, the SPECIFIC INQUIRY command designates the opcode and all operand[0] to [n]. Moreover, the GENERAL INQUIRY command designates only the opcode.

The subunit_type of the field 2132 and the subunit_ID of the field 2134 will next be described. The subunit as the transmission designation of the command frame is identified by the subunit_type and subunit_ID.

Here, the subunit is defined by AV/C Digital Interface Command Set General Specification (March 1998, 1394 Trade Association) (hereinafter referred to as AV/C Command Set specification) or the like. In the AV/C Command Set specification, the subunit is a virtual entry which can present a consistent function set in one certain unit (hereinafter referred to as the unit). Additionally, the unit means an electronic apparatus having the digital interface in conformity with the IEEE 1394 specification.

According to the AV/C Command Set specification, one unit can have a plurality of subunits. Therefore, the subunit_type 2132 and subunit_ID 2134 of the command frame indicate the address for designating the subunit present in a certain unit. Here, the above-described subunit_type 2132 and subunit_ID 2134 are generically called "subunit address (or AV/C address)".

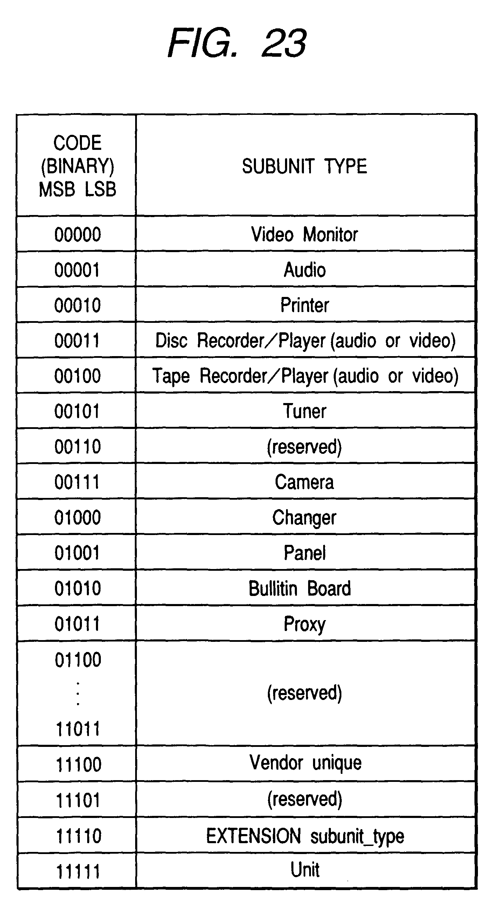

Fig. 23 is a diagram showing one example of the value stored in the field 2132. For example, when the value of the subunit_type 2132 is "1F₁₆", and the value of the subunit_ID 2134 is "3₁₆", the subunit address indicates not the specific subunit but the unit itself.

Moreover, when the computer 10 (controller) transmits the command frame to a camera subunit mounted on the DVCR 200 (target) of the present embodiment, the value of the subunit type 2132 is "00111₂", and the value of the subunit_ID 2134 is "000₂".

Similarly, when the computer 10 (controller) transmits the command frame to a VCR subunit mounted on the DVCR 200 (target) of the present embodiment; the value of the subunit_type 2132 is "00100₂", and the value of the subunit_ID 2134 is "000₂".

Moreover, when the DVCR 200 (controller) transmits the command frame to a printer subunit of the printer 100 (target), for example, the value of the subunit_type 2132 is "00010₂", and the value of the subunit_ID 2134 is "000₂".

Furthermore, when the printer 100 (controller) transmits the command frame to the camera subunit of the DVCR 200 (target), for example, the value of the subunit_type 2132 is "00111₂", and the value of the subunit_ID 2134 is "000₂"

Additionally, when the printer 100 (controller) transmits the command frame to the Proxy subunit of the DVCR 200 (target), for example, the value of the subunit_type 2132 is "01011₂", and the value of the subunit_ID 2134 is "000₂".

The opcode field 2136 and the subsequent operand[0] to [n] shown in Fig. 21A will next be described.

The opcode defines the control content to be executed, the state returned by the response frame described later, and the like. Moreover, the number and content of the operand[0] to [n] differ with the content of the above-described ctype, subunit_type, and opcode.

The structure and function of the response frame will next be described with reference to Fig. 21B. Here, the field having the same function as that of the command frame of Fig. 21A is denoted with the same symbol, and the detailed description thereof is omitted.

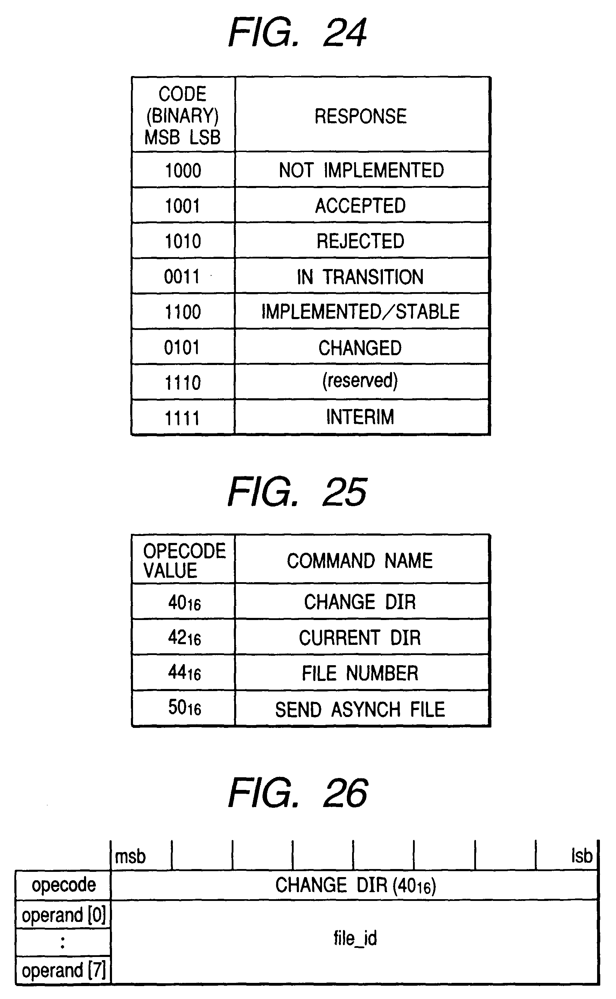

In Fig. 21B, a field 2138 (4 bits) indicates a response type (hereinafter referred to as response). One example of a relation between the value of the field 2138 and the response is shown in Fig. 24.

The subunit of the target 1802 generates an appropriate response frame to the command frame transmitted from the controller 1800, and returns the response frame to the controller 1800. Here, the content of the opcode included in the response frame, and the number and content of the operand[0] to [n] differ with the content of the subunit_type.

The command for remote-controlling the Proxy subunit of the present embodiment will concretely be described with reference to Fig. 25.

### (3-1) CHANGE DIR Command

In Fig. 25, CHANGE DIR command is a command for requesting the Proxy subunit to change the current directory (hereinafter referred to as CHANGE DIR CONTROL command). The CHANGE DIR command is designated by opcode "40₁₆".

One example of the CHANGE DIR CONTROL command is shown in Fig. 26. In Fig. 26, the value indicating the CHANGE DIR command, that is, "40₁₆" is stored in the opcode field. Moreover, the operand[0] to [7] fields indicate File_ID field, and designate the value (8 bytes) managed by the ID field 301.

Here, when the TYPE field 302 of the data file designated by the File_ID field is "FFFF₁₆" (i.e., when the directory is indicated), the Proxy subunit returns ACCEPTED response, and changes the current directory to the directory designated by the File_ID field. On the other hand, when the TYPE field 302 is not "FFFF₁₆", the Proxy subunit returns REJECTED response. In this case, the same value as the value designated by the CHANGE DIR CONTROL command is stored in the File_ID field in the REJECTED response.

### (3-2) CURRENT DIR Command

In Fig. 25, CURRENT DIR command is STATUS command for inquiring of the Proxy subunit the current directory position. The CURRENT DIR command is designated by opcode "42₁₆".

In the Proxy subunit of the present embodiment, operation is performed so as to store the absolute position to the current directory from the directory (route directory) as a basis. Therefore, the Proxy subunit returns the currently stored directory position as a path name to the CURRENT DIR command.

### (3-3) FILE NUMBER Command

In Fig. 25, FILE NUMBER command is STATUS command (hereinafter referred to as FILE NUMBER STATUS command) for inquiring of the Proxy subunit the number of data files in the current directory. The FILE NUMBER command is designated by opcode "44₁₆".

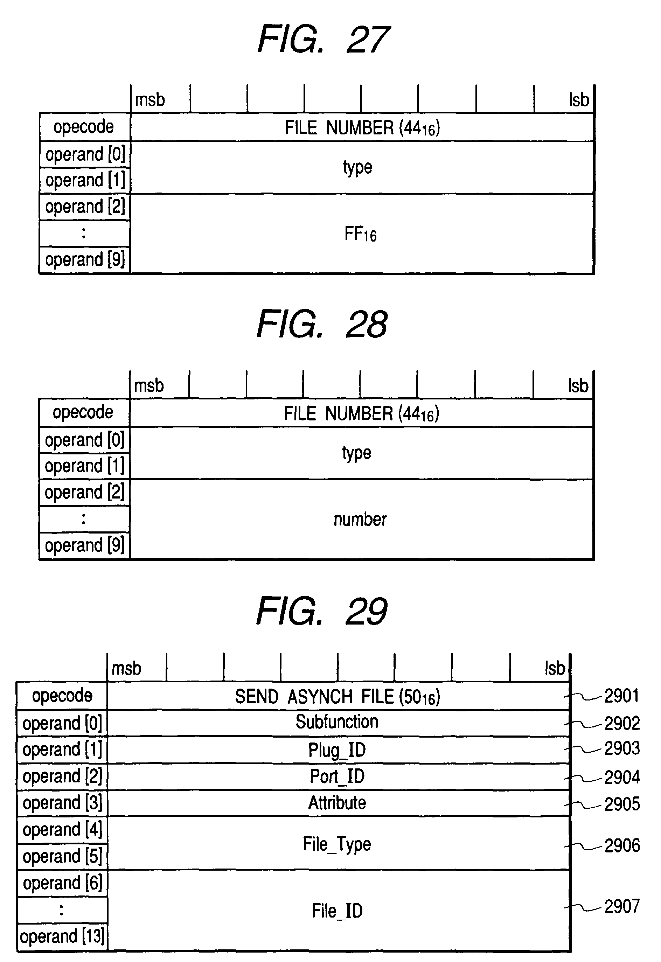

One example of FILE NUMBER STATUS command format is shown in Fig. 27. In Fig. 27, the value indicating the FILE NUMBER STATUS command, that is, "44₁₆" is stored in the opcode field. Moreover, the operand[0] to [1] field is a type field, and designates the value managed by the TYPE field 302. Thereby, the number of data files of the predetermined type present in the current directory can be inquired.

Moreover, when the number of data files of every type present in the current directory is inquired, the inquiry is carried out by designating "FFFF₁₆" in the type field. Furthermore, the value "FF₁₆" indicating dummy data is stored in the operand[2] to [9] field.

One example of the format of the response to the FILE NUMBER STATUS command will next be described with reference to Fig. 28. In Fig. 28, the value indicating the FILE NUMBER STATUS command, that is, "44₁₆" is stored in the opcode field. Moreover, the same value as the TYPE field value designated by the FILE NUMBER STATUS command is stored in the type field. Furthermore, the operand[2] to [9] field is a number field, and stores the number of data files of the type designated by the FILE NUMBER STATUS command.

### (3-4) SEND ASYNCH FILE Command

In Fig. 25, SEND ASYNCH FILE command is CONTROL command for requesting the Proxy subunit to transfer the data file or file attribute information present in the current directory. The operation code of the SEND ASYNCH FILE command is "50₁₆".

In the following embodiment, a procedure of using the SEND ASYNCH FILE command and Asynchronous Connection to transfer the data file and file attribute information will be described.

A procedure will be described by which the Proxy subunit of the present embodiment uses a single connection to transfer the file list (constituted of the file attribute information of various data files) or data file managed by the file system. Here, the connection indicates a logical connection relation set between two or more modes.

Here, the connection setting method and data transfer method are realized according to the procedure in conformity with Asynchronous Connection. The Asynchronous Connection is a communication protocol by which Asynchronous transfer mode of IEEE 1394-1995 specification is used to efficiently and continuously transfer the data of the predetermined unit. Additionally, the Asynchronous Connection is described in detail in AV/C Compatible Asynchronous Serial Bus Connection (issued by 1394 Trade Association) and AV/C Commands for Management of Asynchronous Serial Bus Connections (issued by 1394 Trade Association).

The node for transmitting the file list and data file via the Proxy subunit is hereinafter referred to as SOURCE, the node for requesting the file list and data file via the Proxy subunit is referred to as DESTINATION, and the code for setting the connection between SOURCE and DESTINATION connected via the 1394 serial bus 10 is referred to as CONTROLLER. The CONTROLLER may comprise the node as the SOURCE, the node as the DESTINATION, or any other node.

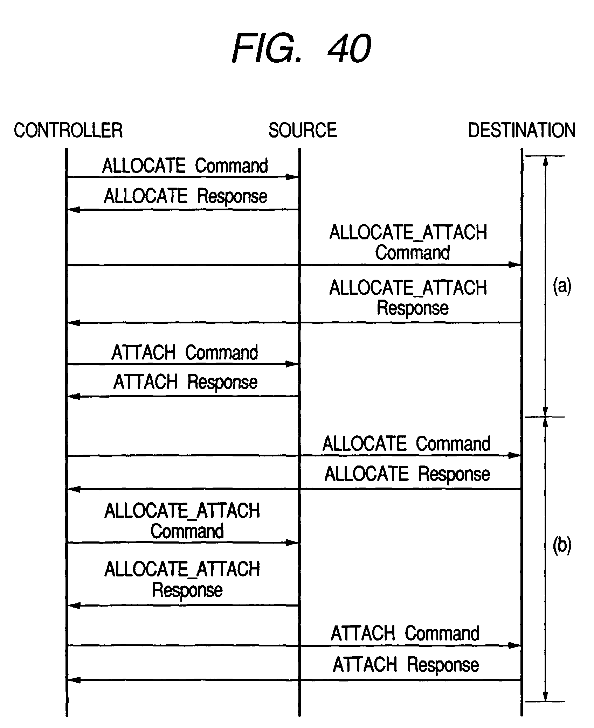

The CONTROLLER successively issues ALLOCATE, ALLOCATE_ATTACH, ATTACH commands, and sets the connection between SOURCE and DESTINATION according to the predetermined procedure, before the file list or the data file is transferred between SOURCE and DESTINATION (see (a) in Fig. 40).

After the connection is set, the DESTINATION first requests the SOURCE for the transmission of the file list (see S33, S34 of Fig. 3). Based on this file list, the DESTINATION selects a specific data file from a plurality of data files of the SOURCE (see S38 of Fig. 3).

One example of SEND ASYNCH FILE command is shown in Fig. 29. In Fig. 29, the code indicating the SEND ASYNCH FILE command (i.e., "50₁₆") is set in an opcode field 2901. Moreover, the code indicating the content of the command frame of this command is set in a Subfunction field 2902.

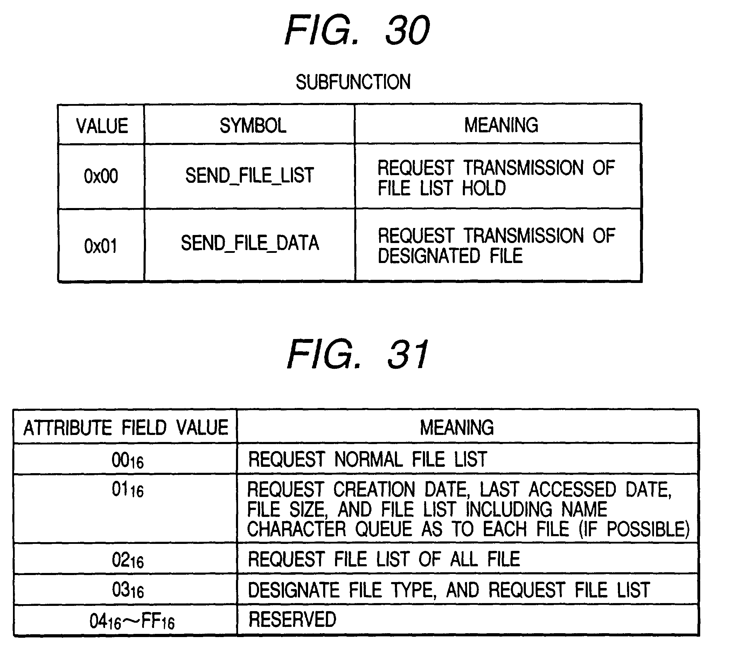

One example of the code set in the Subfunction field 2902 is shown in Fig. 30. In Fig. 30, when the transfer of the file list is requested, the code ("0x00" ) indicating SEND_FILE_LIST is set in this field. Moreover, when the transfer of the specific data file is requested, the code ("0x01") indicating SEND_FILE_DATA is set in this field.

Furthermore, the code used for output of the execution result of this command and designating Plug_ID is set in a Plug_ID field 2903. The value used for output of the execution result of this command and designating Port_ID is set in a Port_ID field 2904. The above-described connection is distinguished by the combination of Plug_ID and Port_ID. An Attribute field 2905 is used when the content of the file list requested to be transmitted is designated in detail.

One example of the value stored in the Attribute field 2905 is shown in Fig. 31. In Fig. 31, when the code set in the Attribute field 2905 is "00₁₆", a normal file list is requested. Specifically, the file list constituted of ID field 301 and TYPE field 302 of one or more data files present in the current directory is transferred. Additionally, this file list is transferred according to the Asynchronous Connection.

Moreover, when the code set in the Attribute field 2905 is "01₁₆", the file list including the OPTIONAL_FIELD 304 is transferred. Specifically, transferred is the file list which is constituted of the CREATE_DATE field of Fig. 5, ACCESS_TIME field of Fig. 6, SIZE field of Fig. 7, and NAME field of Fig. 8, in addition to the ID field 301 and TYPE field 302 of one or more files present in the current directory. Additionally, this file list is transferred according to the Asynchronous Connection.

Here, when the code set in the Attribute field 2905 is "00₁₆" or "01₁₆" , the file attribute information of the file with the value of the hidden flag 406 or lock flag 407 shown in Fig. 4 being "1" fails to be transferred. However, when the code set in the Attribute field is "02₁₆", the file attribute information of the file with the value of the hidden flag 406 or lock flag 407 being "1" is also transferred.

Furthermore, when the code set in the Attribute field 2905 is "03₁₆", the file list of the designated file type is requested. In this case, the designation of the file type is defined in a File_type field 2906. The Proxy subunit of the present embodiment transfers the file list constituted of the file attribute information of the data file of the type designated by the File_type field 2906. Additionally, this file list is transferred according to the Asynchronous Connection.

In Fig. 29, the File_type field 2906 is used when the file list of the file of the specific type is requested. One example of the value stored in this field is shown in Fig. 10. A File_ID field 2907 is used when the file list of the file of the specific type is requested, or when the specific data file is requested. The value managed in the above-described ID field 301 is stored in this field.

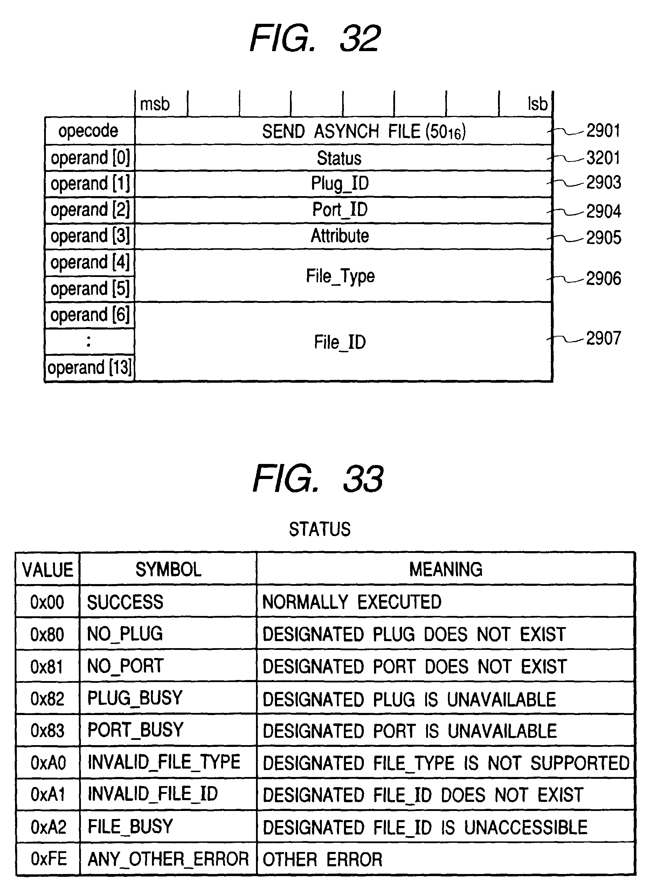

Fig. 32 shows a format example of the response to the SEND ASYNCH FILE command shown in Fig. 29.

The same value as that of the CTS command of Fig. 29 is set in the fields other than a Status field 3201. The value indicating the execution status to this CTS command is set in the Status field 3201. One example of the value stored in this field is shown in Fig. 33.

Moreover, in this CTS response, in accordance with the execution result, ACCEPTED or REJECTED is set in the response field, and either one of the status codes shown in Fig. 33 is set in the Status field 3201. The same value as that of the command frame is set in the other fields.

After the CTS response shown in Fig. 32 is returned, the SOURCE (the Proxy subunit of the present embodiment) uses the connection set by the Asynchronous Connection to write the file list requested by the above-described SEND ASYNCH FILE command to Segment_Buffer of DESTINATION. In this case, after dividing this file list into one or more segments as occasion demands, the SOURCE generates at least one frame constituted of one or more segments, and successively writes the frames to the Segment_Buffer designated by the Plug_ID field 2903 and Port_ID field 2904 of the SEND ASYNCH FILE command.

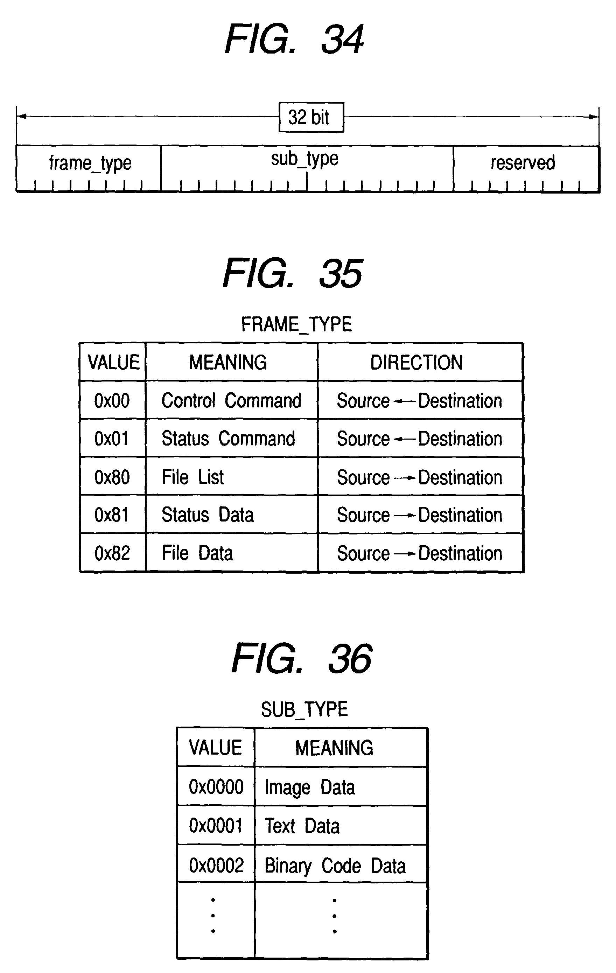

Each frame is constituted of SubFrame and actual data (one or more segments). This frame is set to the data field 1970 of the Asynchronous packet shown in Fig. 19, and written to the Segment_Buffer used by the Proxy subunit of the present embodiment in accordance with the write transaction. Moreover, sub_type field is a field effective when the frame_type field indicates File Data, and indicates the content of File Data. One example of the code set in this field is shown in Fig. 36. Furthermore, a reserved field is a field for the future extension.

One example of SubFrame format is shown in Fig. 34. The SubFrame is constituted of 32 bits, and comprises frame_type, sub_type, Reserved fields. The code indicating the type of the data set in this frame is set in the frame_type field. One example of the code set in this field is shown in Fig. 35.

In Fig. 35, Direction indicates that the frame is transmitted from SOURCE or DESTINATION. Control Command ("0x00"), Status Command ("0x81") are set to the frame written to the Segment_Buffer of SOURCE from DESTINATION, and File List ("0x80"), Status Data ("0x81"), File Data ("0x82") are set to the frame written to the Segment_Buffer of DESTINATION from SOURCE.

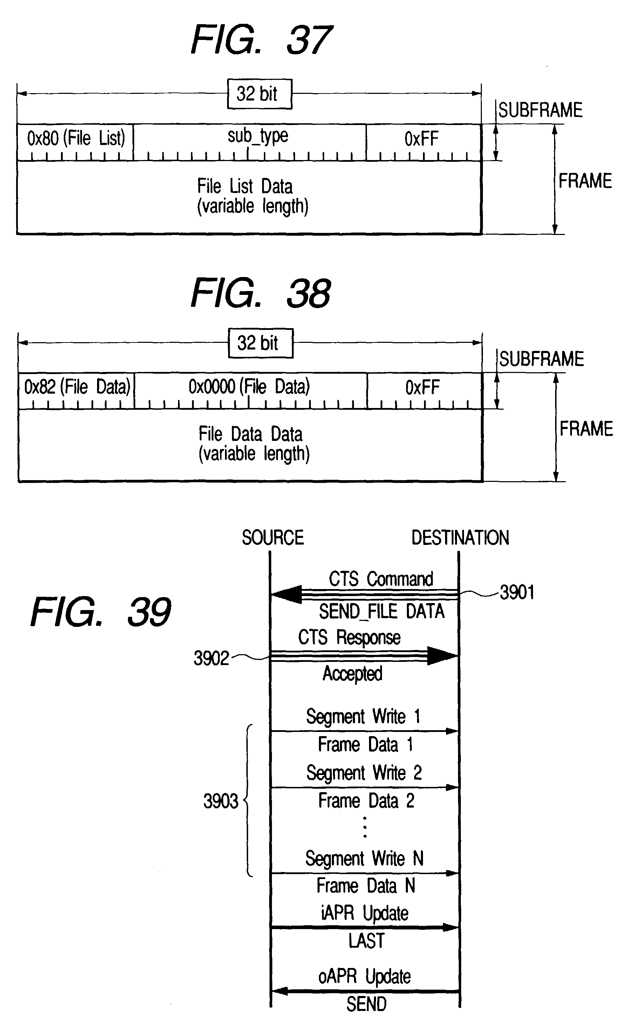

One example of the frame constituted of the file list is shown in Fig. 37. In Fig. 37, the top four bytes form a field to which the above-described SubFrame is set. The code indicating the file list (i.e., "0x80" shown in Fig. 35) is set in this frame_type field. The value indicating the file type of the requested file list (see Fig. 36) is set in the next sub_type field. When the image file is designated, "0000₁₆" is set. When nothing is designated, "FFFF₁₆" is set. An eighth byte and subsequent bytes form a data field with a variable length in which the file list itself is stored.

A procedure of the Proxy subunit of the present embodiment for transferring the data file requested by DESTINATION will nest be described with reference to Fig. 39 (see S39 of Fig. 3).

First, DESTINATION transmits the SEND ASYNCH FILE command with the SEND_FILE_DATA code set thereto to the Proxy subunit of SOURCE (3901 of Fig. 39). This SEND ASYNCH FILE command includes Plug_ID and Port_ID indicating the connection between SOURCE and DESTINATION, and File_ID indicating the data file whose transmission is requested to SOURCE.

When the transmission is possible, SOURCE returns Accepted response to DESTINATION (3902 of Fig. 39), then divides the data file requested by DESTINATION into one or more segments, and generates at least one frame including one or more segments. Subsequently, each frame is successively written to the Segment_Bufer of DESTINATION using Asynchronous Write transaction (3903 of Fig. 39).

The format example of the frame transmitted to DESTINATION from SOURCE is shown in Fig. 38. The SubFrame shown in Fig. 34 is set in the top four bytes in Fig. 38. The code indicating the data file ("0x82" shown in Fig. 35) is set to a first byte of SubFrame. The type of the file to be transmitted is set to second and third bytes. For example, when the predetermined image file is requested, the code indicating Image Data ("0x0000" shown in Fig. 36) is set. The file itself to be transmitted is set in an eighth byte and subsequent bytes.

When DESTINATION requests the file list of other data files or other directories, SOURCE and DESTINATION perform communication according to the above-described procedure, and the file list is transferred via the above-described connection.

### (3-5) Other example of SEND ASYNCH FILE Command

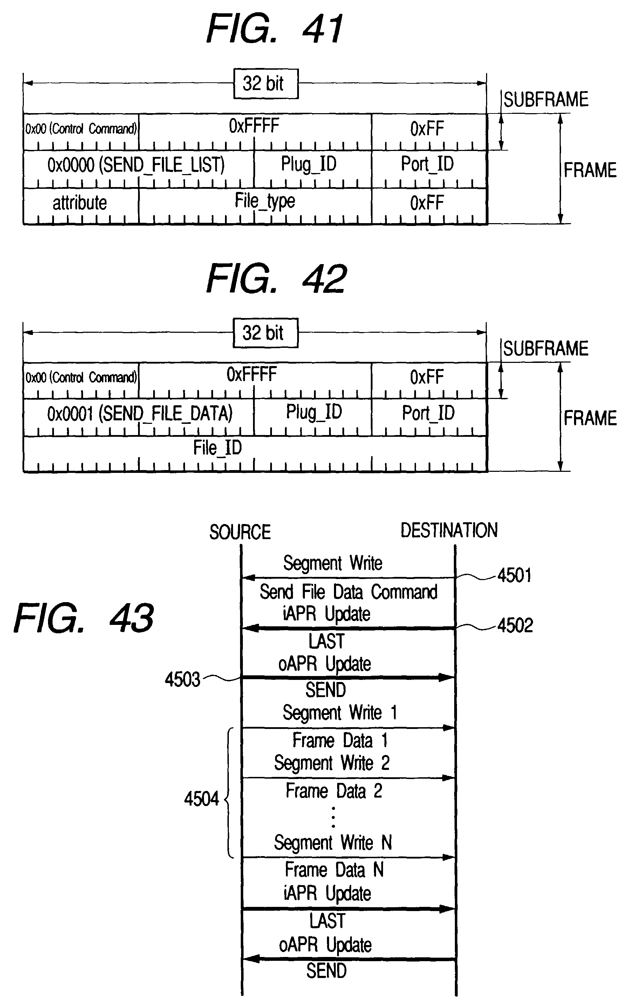

Other examples of the SEND ASYNCH FILE command are shown in Figs. 41 and 42. The SEND ASYNCH FILE command shown in Figs. 41 and 42 does not conform to the above-described CTS command.

Fig. 41 shows the SEND ASYNCH FILE command for requesting the file list. The code indicating the control command is set to a first byte of SubFrame in Fig. 41. The code (SEND_FILE_LIST) indicating the request for the file list is set to a fifth byte as a function field. The code designating a first connection described later is set to Plug_ID and Port_ID fields. Moreover, the code (see Fig. 31) for designating the content of the file list to be transmitted in detail is set to Attribute field. The code (see Fig. 10) for requesting the file list of data files of the specific type (e.g., image file) is set to File_type field.

Fig. 42 shows the SEND ASYNCH FILE command for requesting the data file. The code indicating the control command is set to a first byte of SubFrame in Fig. 42. The code (SEND_FILE_DATA) indicating the request for the data file is set to a fifth byte as the function field. The code designating the first connection described later is set to Plug_ID and Port_ID fields. The File_ID of the data file requested by DESTINATION (i.e., the value managed by the ID field 301 of Fig. 3) is set to File_ID field.

The SEND ASYNCH FILE command shown in Figs: 41 and 42 is set to the data field 1970 of the Asynchronous packet shown in Fig. 19, and subjected to the write transaction to the Segment_Buffer used by the Proxy subunit.

In the following embodiment, a procedure of transferring the data file or file list using this SEND ASYNCH FILE command and Asynchronous Connection will be described.

A procedure will be described by which the Proxy subunit of the present embodiment uses two connections to transfer the file list or the data file managed by the above-described file system. A method of setting two connections and a data transfer method are realized in accordance with the procedure in conformity with the Asynchronous Connection.

First, the procedure of setting two connections will be described with reference to Fig. 40. In (a) in Fig. 40, CONTROLLER first transmits ALLOCATE command described later to SOURCE and waits for the response. On receiving ALLOCATE response from SOURCE, the CONTROLLER transmits ALLOCATE_ATTACH command described later to DESTINATION and waits for the response. After the ALLOCATE_ATTACH response is received from DESTINATION, the CONTROLLER transmits ATTACH command described later to SOURCE and waits for the response.

By the above-described procedure, CONTROLLER can set the first connection between SOURCE and DESTINATION. The DESTINATION uses this first connection to transmit the command for remote-operating the SOURCE, the command for requesting the desired data file and file list, and the like.

Subsequently, in Fig. 40B, CONTROLLER transmits the ALLOCATE command to DESTINATION and waits for the response. On receiving the ALLOCATE response from DESTINATION, the CONTROLLER transmits the ALLOCATE_ATTACH command to SOURCE and waits for the response. After the ALLOCATE_ATTACH response is received from SOURCE, the CONTROLLER transmits the ATTACH command to DESTINATION and waits for the response.

By the above-described procedure, CONTROLLER can set a second connection between SOURCE and DESTINATION. The SOURCE uses this second connection to transmit the response data to the command from DESTINATION, the file list and data file (including the image data) requested by DESTINATION, and the like.

After the bi-directional connection is set between SOURCE and DESTINATION by the procedure shown in Fig. 40, the DESTINATION transmits the SEND ASYNCH FILE command shown in Fig. 41 to the Segment_Buffer of SOURCE via the first connection.

After the SEND ASYNCH FILE command shown in Fig. 41 is received, the SOURCE confirms the content of this frame. Subsequently, the SOURCE successively transfers the file list of the type requested by DESTINATION to the Segment_Buffer of DESTINATION via the second connection.

Subsequently, when the transfer of the specific data file managed by the file system of SOURCE is requested, DESTINATION transmits the SEND ASYNCH FILE command shown in Fig. 42 to SOURCE via the first connection (4501 of Fig. 43).

After the SEND ASYNCH FILE command shown in Fig. 42 is transmitted, DESTINATION updates iAPR (described later) of SOURCE via the first connection (4502 of Fig. 43). After the SOURCE with the updated iAPR checks the data written in Segment_Buffer and obtains the data file ID to be transmitted, oAPR of DESTINATION is updated (4503 of Fig. 43).

Subsequently, SOURCE successively transfers the data file requested by DESTINATION to DESTINATION via the above-described second connection (4503 of Fig. 45). Specifically, SOURCE divides the data file requested by DESTINATION into one or more segments, and generates at least one frame including one or more segments. Subsequently, the frames are successively written to the Segment_Buffer of DESTINATION using the Asynchronous Write transaction (4504 of Fig. 43).

As described above, according to the present embodiment, in the node comprising one or more function units, there can be provided a virtual function unit which can collectively manage various data files handled by the function units. Thereby, simply by transmitting the command for selecting the necessary data file and file list, the control node can receive the data file and file list without directly operating each function unit of the non-control node.

Moreover, according to the present embodiment, in the node comprising one or more function units, there can be provided a virtual function unit which sets the file systems of the function units to be common. Thereby, the control node may only be adapted to the file system presented by the virtual function unit without being adapted to all the file systems of the function units of the non-control node.

Furthermore, according to the present embodiment, one or more logical connection relations are set between the control node and the non-control node connected to the bus-type network, and the data file and file list requested by the control node can quickly and securely be transferred via the connection relation.

### (Other Embodiments)

The present invention can be applied not only to the device constituted of a single apparatus, but also to the system constituted of a plurality of apparatuses such as a host computer, an interface apparatus, and a printer.

Moreover, the present invention can be implemented by supplying the program code of the software for realizing the function of the above-described embodiment to the equipment connected to various devices, or the computer in the system so that various devices operate to realize the function of the embodiment, and operating each device in accordance with the program stored in the system, or the computer (CPU or MPU) of the equipment.

In the above-described constitution, the program code itself of the software realizes the function of the embodiment, and the program code itself, and the means for supplying the program code to the computer constitute the present invention.

For example, the storage medium in which the program code to realize the function of the embodiment is stored constitutes the present invention. Specifically, any of the storage media in which the program code to realize the function of the embodiment is stored can be applied to the present invention, such as a floppy disc, hard disc and other magnetic disc media, an optical magnetic disc, CD-ROM and other optical disc media, a magnetic tape and other tape media, a flash memory and other nonvolatile memories, a program ROM, EPROM, EEPROM and various ROMs, and various other memories.

Moreover, when the computer executes the supplied program code, the function of the above-described embodiment is realized. Additionally, even when the program code can realize the function of the embodiment in cooperation of the operating system (OS) operating in the computer, or other applications, needless to say, such program code is included in the embodiment.

Even when the function of the embodiment can be realized, it goes without saying that such program code is included in the embodiment of the present invention.

Furthermore, after the supplied program code is stored in the memory mounted on the function extension board of the computer or the function extension unit connected to the computer, the CPU or the like mounted on the function extension board or the function extension unit performs a part or the whole of the actual processing based on the instruction of the program code, and the function of the above-described embodiment is realized by the processing. Needless to say, even this case is included in the embodiment of the present invention.

The invention may be embodied in other specific forms without departing from the spirit or essential characteristics thereof.

For example, the example of the Proxy subunit to convert the file system of the camera subunit or the VCR subunit has been described in the present embodiment, but the present embodiment can also be applied to other function units.

Therefore, the above-mentioned embodiments are merely examples in all respects, and must not be construed to limit the invention.

The scope of the present invention is defined by the scope of the appended claims, and is not limited at all by the specific descriptions of this specification. Furthermore, all the modifications and changes belonging to equivalents of the claims are considered to fall within the scope of the present invention.

## Claims

1. A data communication system which includes a first apparatus having a first unit for controlling a predetermined function and a second apparatus for controlling said first apparatus, said data communication system comprising:
(a) file management means for managing a file treated by said first unit, said file management means being included in said first apparatus; and
(b) communication means for transmitting a first control signal and a second control signal for controlling said file management means, said communication means being included in said second apparatus,
wherein said file management means performs control based on said first control signal to transmit additional information of the file treated by said first unit, and performs the control based on said second control signal to transmit the file treated by said first unit.

2. A data communication system according to claim 1,
wherein said file management means manages said file in a hierarchical manner.

3. A data communication system according to claim 1,
wherein said file management means manages the additional information of said file based on a predetermined data structure.

4. A data communication system according to claim 1,
wherein said file management means performs the control based on said first control signal to transmit the additional information of the file of a predetermined type.

5. A data communication system according to claim 1,
wherein said file management means manages the file treated by the unit for managing the function different from the function of said first unit based on said predetermined management method.

6. A data communication system according to claim 1,
wherein said first apparatus generates at least one frame from the additional information of said file or said file, and successively Asynchronous-transfers said frame.

7. A data communication system according to claim 1,
wherein said external apparatus has a unit for managing the function different from the function of said first unit, and manages the file treated by said unit based on said predetermined management method.

8. A data communication system according to claim 1,
wherein said first unit treats an image file.

9. A data communication system according to claim 1,
wherein said first unit is a unit for controlling an image pickup function.

10. A data communication system according to claim 1,
wherein said first unit is a unit for controlling the recording/regenerating of an image file.

11. A data communication device having a first unit for controlling a predetermined function, said data communication device comprising:
(a) file management means for managing a file treated by said first unit based on a predetermined management method; and
(b) communication means for receiving a first control signal and a second control signal transmitted from an external apparatus,
wherein said file management means performs control based on said first control signal to transmit additional information of the file treated by said first unit, and performs the control based on said second control signal to transmit the file treated by said first unit.

12. A data communication device according to claim 11,
wherein said file management means manages said file in a hierarchical manner.

13. A data communication device according to claim 11,
wherein said file management means manages the additional information of said file based on a predetermined data structure.

14. A data communication device according to claim 11,
wherein said file management means performs the control based on said first control signal to transmit the additional information of the file of a predetermined type.

15. A data communication device according to claim 11,
wherein said file management means manages the file treated by the unit for managing the function different from the function of said first unit based on said predetermined management method.

16. A data communication device according to claim 11,
wherein said communication means generates at least one frame from the additional information of said file or said file, and successively Asynchronous-transfers said frame.

17. A data communication device according to claim 11,
wherein said external apparatus has a unit for managing the function different from the function of said first unit, and manages the file treated by said unit based on said predetermined management method.

18. A data communication device according to claim 11,
wherein said first unit treats an image file.

19. A data communication device according to claim 11,
wherein said first unit is a unit for controlling an image pickup function.

20. A data communication device according to claim 11,
wherein said first unit is a unit for controlling the recording/regenerating of an image file.

21. A method of controlling an apparatus having a first unit for controlling a predetermined function, the method comprising the steps of:
(a) managing a file treated by said first unit based on a predetermined management method;
(b) receiving a first control signal and a second control signal transmitted from an external apparatus;
(c) performing control based on said first control signal to transmit additional information of the file treated by said first unit; and
(d) performing the control based on said second control signal to transmit the file treated by said first unit.

22. A method according to claim 21,
wherein said predetermined management method comprises managing said file in a hierarchical manner.

23. A method according to claim 21,
wherein said predetermined management method comprises managing the additional information of said file based on a predetermined data structure.

24. A method according to claim 21,
wherein the control is performed based on said first control signal to transmit the additional information of the file of a predetermined type.

25. A method according to claim 21 further comprising:
managing the file treated by the unit for managing the function different from the function of said first unit based on said predetermined management method.

26. A method according to claim 21 further comprising:
generating at least one frame from the additional information of said file or said file, and successively Asynchronous-transferring said frame.

27. A method according to claim 21,
wherein said external apparatus has a unit for managing the function different from the function of said first unit, and manages the file treated by said unit based on said predetermined management method.

28. A method according to claim 21,
wherein said first unit treats an image file.

29. A method according to claim 21,
wherein said first unit is a unit for controlling an image pickup function.

30. A method according to claim 21,
wherein said first unit is a unit for controlling the recording/regenerating of an image file.

31. A storage medium in which a program for controlling an apparatus having a first unit for controlling a predetermined function is recorded, said program comprising the steps of:
(a) managing a file treated by said first unit based on a predetermined management method;
(b) receiving a first control signal and a second control signal transmitted from an external apparatus;
(c) performing control based on said first control signal to transmit additional information of the file treated by said first unit; and
(d) performing the control based on said second control signal to transmit the file treated by said first unit.

32. A data communication device for cooperation with other devices comprising a file management system for managing files and adapted to convert files from another device or devices into files accessible by the data communication device.
